# EUROPEAN PATENT APPLICATION

(11) **EP 4 332 910 A1**
(43) Date of publication of application: **06.03.2024**
(21) Application number: 22794796.7
(22) Date of filing: 24.04.2022
(51) Int. Cl.: G06V 10/82

(54) **BEHAVIOR DETECTION METHOD, ELECTRONIC DEVICE, AND COMPUTER READABLE STORAGE MEDIUM**

(30) Priority: 27.04.2021 CN 202110459730
(71) Applicant: ZTE Corporation, Shenzhen, Guangdong 518057 (CN)
(72) Inventor: XU, Qian, Shenzhen, Guangdong 518057 (CN); JIA, Xia, Shenzhen, Guangdong 518057 (CN); LIU, Ming, Shenzhen, Guangdong 518057 (CN); ZHANG, Yufeng, Shenzhen, Guangdong 518057 (CN); LIN, Weiyao, Shenzhen, Guangdong 518057 (CN)
(74) Representative: Ipsilon
(86) International application number: PCT/CN2022/088692
(87) International publication number: WO 2022/228325

(57) **Abstract**

The present disclosure provides a behavior detection method, including: acquiring data of a plurality of video image frames from a video stream; and detecting a pedestrian behavior in the video stream according to the data of the plurality of video image frames, the detecting a pedestrian behavior in the video stream according to the data of the plurality of video image frames includes at least: inputting the data of the plurality of video image frames into a two-dimensional convolutional neural network, and identifying the pedestrian behavior in the video stream according to an association relationship between time sequences of the data of the plurality of video image frames and the data of the plurality of video image frames. The present disclosure further provides an electronic device, and a computer-readable storage medium.

## Description

### CROSS-REFERENCE TO RELATED APPLICATIONS

The present disclosure claims the priority of Chinese Patent Application No. 202110459730.8, filed on April 27, 2021, the contents of which are incorporated herein in their entirety by reference.

### TECHNICAL FIELD

The present disclosure relates to the field of image identification technology, and in particular, relates to a behavior detection method, an electronic device, and a computer-readable storage medium.

### BACKGROUND

Intelligent video surveillance is based on a computer vision technology, can perform intelligent analysis on video data, and is widely applied to the fields of security, intelligent transport, and the like, so that a security response rate is greatly improved and human resources are saved. Pedestrians are key focused objects of the intelligent video surveillance, and implementing detection and identification on various pedestrian behaviors (e.g. abnormal behaviors, etc.) is one of important expectations in the field of security.

In some technologies, the intelligent video surveillance can detect and identify various pedestrian behaviors from massive surveillance videos by adopting an intelligent video analysis technology, to provide important references for public safety emergency management, which is favorable to reduce harm of public safety emergencies. However, deployment expectations in some practical application scenarios still cannot be satisfied by the technologies for detecting and identifying pedestrian behaviors,

### SUMMARY

In a first aspect, the present disclosure provides a behavior detection method, including: acquiring data of a plurality of video image frames from a video stream; and detecting a pedestrian behavior in the video stream according to the data of the plurality of video image frames; the detecting a pedestrian behavior in the video stream according to the data of the plurality of video image frames includes at least: inputting the data of the plurality of video image frames into a two-dimensional convolutional neural network, and identifying the pedestrian behavior in the video stream according to an association relationship between time sequences of the data of the plurality of video image frames and the data of the plurality of video image frames.

In a second aspect, the present disclosure provides an electronic device, including: at least one processor; a memory having at least one computer program stored thereon, the at least one computer program, executed by the at least one processor, causes the at least one processor to implement the behavior detection method provided in the first aspect of the present disclosure; and at least one I/O interface connected between the processor and the memory and configured to implement information interaction between the processor and the memory.

In a third aspect, the present disclosure provides a computer-readable storage medium having a computer program stored thereon, the computer program, executed by a processor, causes the processor to implement the behavior detection method provided in the first aspect of the present disclosure.

### BRIEF DESCRIPTION OF DRAWINGS

Fig. 1 is a flowchart of a behavior detection method according to the present disclosure;
Fig. 2 is a flowchart of a part of operations of a behavior detection method according to the present disclosure;
Fig. 3 is a flowchart of a part of operations of a behavior detection method according to the present disclosure;
Fig. 4 is a flowchart of a part of operations of a behavior detection method according to the present disclosure;
Fig. 5 is a flowchart of a part of operations of a behavior detection method according to the present disclosure;
Fig. 6 is a flowchart of a part of operations of a behavior detection method according to the present disclosure;
Fig. 7 is a flowchart of a part of operations of a behavior detection method according to the present disclosure;
Fig. 8 is a flowchart of a part of operations of a behavior detection method according to the present disclosure;
Fig. 9 is a flowchart of a part of operations of a behavior detection method according to the present disclosure;
Fig. 10 is a flowchart of a part of operations of a behavior detection method according to the present disclosure;
Fig. 11 is a schematic block diagram of an electronic device according to the present disclosure;
Fig. 12 is a schematic block diagram of a computer readable medium according to the present disclosure; and
Fig. 13 is a schematic block diagram of a behavior detection apparatus and system architecture in an example according to the present disclosure.

### DETAIL DESCRIPTION OF EMBODIMENTS

In order to make those skilled in the art better understand the technical solutions of the present disclosure, a behavior detection method, an electronic device, and a computer readable storage medium provided in the present disclosure are described in detail below with reference to the accompanying drawings.

Exemplary implementations are described in detail below with reference to the accompanying drawings, but may be embodied in different forms, and should not be construed as limited to the implementations set forth herein. The implementations are provided to make the present disclosure more thorough and complete, and for those skilled in the art fully understanding the scope of the present disclosure.

The implementations of the present disclosure and the technical features in the implementations may be combined with each other if no conflict is incurred.

As used herein, a term "and/or" includes any and all combinations of at least one of listed items.

The terms used in the present disclosure are for a purpose of describing particular embodiments only, and are not intended to limit the present disclosure. As used in the present disclosure, singular forms "a" and "the" are intended to include plural forms as well, unless the context clearly defines otherwise. It should further be understood that terms "includes/comprises" and/or "made of/consisted of" in the present disclosure are used to specify a presence of at least one of recited features, integers, steps, operations, elements or components, but do not preclude a presence or an addition of at least one of other features, integers, steps, operations, elements, components or groups thereof.

Unless otherwise defined, meanings of all terms (including technical terms and scientific terms) used herein are the same as meanings commonly understood by one of ordinary skill in the art. It should further be understood that terms, such as those defined in common dictionaries, should be construed as having a meaning that is consistent with that in background of the existing art and the present disclosure, and should not be construed as having an idealized or over-formal meaning, unless expressly defined in the present disclosure.

In some technologies, pedestrian behaviors are mainly detected by a frame difference method. That is, an abnormal behavior region is coarsely positioned by analyzing a change of a frame difference of continuous image frames in a video, and then behavior identification is performed on the coarsely positioned region to determine whether abnormal behaviors exist or determine types of the abnormal behaviors existing in the region. The technology of detecting and identifying abnormal behaviors of pedestrians based on the frame difference method is sensitive to illumination changes, and the change of the frame difference is not always caused by abnormal behaviors of pedestrians, a plurality of non-abnormal behaviors may also result in violent changes of the image frames, but some abnormal behaviors may not result in the violent changes of the image frames. In addition, because the frame difference method uses continuous image frames to position abnormal behaviors, the behavior identification performed on the coarsely positioned region is based on the continuous image frames, if the number of the continuous image frames used for the behavior identification is relatively small, time domain information may be wasted; if the number of the continuous image frames used for the behavior identification is relatively large, time overhead and resource consumption for detecting and identifying abnormal behaviors may be increased. Therefore, the frame difference method is more suitable for scenarios with few pedestrians and single background.

In some technologies, whether abnormal behavior exists is determined by analyzing the behavior of each pedestrian, for example, a spatial position of each pedestrian is determined and tracked by using pedestrian detection or skeletal point analysis, a trajectory of each pedestrian in a dimension of time is obtained, and then a motion image sequence or a motion sequence of skeletal points of individual pedestrians is summarized and the behavior identification is performed to determine the type of the abnormal behavior. For performing the pedestrian detection or the skeletal point analysis, a viewing angle of a surveillance device is strictly required, if the viewing angle of the surveillance device is for a top view, a problem exists in an aspect of determining the skeletal point of the pedestrian, if the viewing angle of the surveillance device is for a flat view, it may be possible that the spatial position of the pedestrian cannot be determined due to mutual shielding between pedestrians, so that false detection and missing detection are caused. In addition, each of the pedestrian detection and the skeletal point analysis would consume a large amount of computing resources, resulting in a relatively slow processing speed, and thus real-time analysis expectations on detecting and identifying abnormal behaviors cannot be met.

In some technologies, a three-dimensional convolutional neural network or a two-stream convolutional network is adopted to perform abnormal behavior detection and identification on a basis of learning time sequence information of abnormal behaviors, however, the three-dimensional convolutional neural network and the two-stream convolutional network can only learn short-time sequence information, for example, a single calculation of a three-dimensional convolutional neural network of 3×5×5 only associate three frames of images, an optical flow operation in the two-stream convolutional network is obtained through a calculation on adjacent frames; the three-dimensional convolutional neural network and the two-stream convolutional network each consume a large amount of resources during running. In some technologies, a two-dimensional convolutional neural network is adopted to extract and stack features, and then the three-dimensional convolutional neural network is used to fuse time sequence information to perform the abnormal behavior detection and identification, but since the three-dimensional convolutional neural network is used, an improvement of the running speed is limited. In some technologies, a single video image frame is directly used or features of a plurality of video image frames are stacked, and then abnormal behaviors are classified, but an association relationship between the frames is ignored, the time sequence information is wasted, and precision of the detection and identification is reduced.

In summary, the above technologies of detecting and identifying abnormal behaviors are difficult to meet the deployment expectations in some practical scenarios.

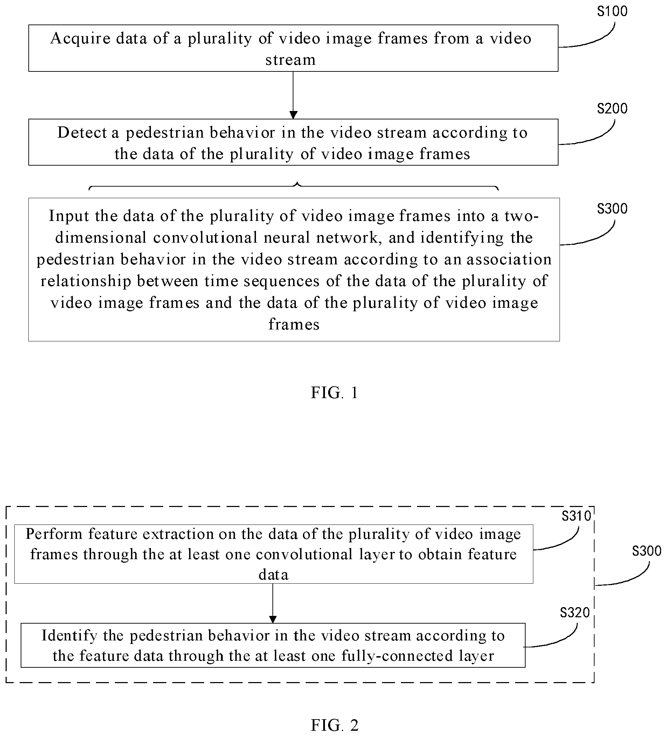

In view of above, in a first aspect, referring to Fig. 1, the present disclosure provides a behavior detection method, including operations S 100 and S200.

At operation S100, acquiring data of a plurality of video image frames from a video stream.

At operation S200, detecting a pedestrian behavior in the video stream according to the data of the plurality of video image frames.

The operation S200 includes at least an operation S300.

At operation S300, inputting the data of the plurality of video image frames into a two-dimensional convolutional neural network, and identifying the pedestrian behavior in the video stream according to an association relationship between time sequences of the data of the plurality of video image frames and the data of the plurality of video image frames.

In some implementations, the video stream at the operation S100 is obtained by a surveillance device. In the present disclosure, the video stream may be obtained in real time by the surveillance device, or may be obtained by the surveillance device and then stored in the computer-readable storage medium. The present disclosure is not particularly limited to the above way. It should be noted that, in the present disclosure, each behavior detection corresponds to a video stream of a certain duration, i.e., the data of the plurality of video image frames is obtained from the video stream of the certain duration.

In some implementations, the data of the plurality of video image frames at the operation S 100 is data to be processed by the two-dimensional convolutional neural network in the present disclosure. In the present disclosure, after the video stream is decoded, the plurality of video image frames can be obtained, and data of each video image frame corresponds to the video image frame.

The pedestrian behavior has temporal continuity, and accordingly, the plurality of video image frames obtained by decoding the video stream have an association relationship in time sequence, and the data of the plurality of video image frames respectively corresponding to the plurality of video image frames also have an association relationship in time sequence. The two-dimensional convolutional neural network adopted in the present disclosure can learn features of data of each video image frame, and can also learn the association relationship between time sequences of the data of the plurality of video image frames, so that the pedestrian behavior can be detected according to the association relationship between the time sequences of the data of the plurality of video image frames and the data of the plurality of video image frames.

In some implementations, during detecting the pedestrian behavior in the video stream according to the data of the plurality of video image frames, identifying the pedestrian behavior in the video stream may be performed, and the identifying the pedestrian behavior includes, but is not limited to, determining whether any pedestrian behavior exists, determining the type of the pedestrian behavior, and the like. In some implementations, during detecting the pedestrian behavior in the video stream according to the data of the plurality of video image frames, identifying the pedestrian behavior in the video stream may be performed firstly, and then the spatial position of the pedestrian behavior may be detected. The type of the pedestrian behavior is not limited in the present disclosure. In some implementations, the pedestrian behavior may include abnormal behavior, such as falling, fighting, or may also include normal behavior such as running, jumping.

In the behavior detection method provided in the present disclosure, the pedestrian behavior is detected based on the two-dimensional convolutional neural network, the two-dimensional convolutional neural network adopted in the present disclosure can learn features of data of each video image frame, and can also learn the association relationship between the time sequences of the data of the plurality of video image frames, so that the pedestrian behavior in the video stream can be identified according to the association relationship between the time sequences of the data of the plurality of video image frames and the data of the plurality of video image frames. Compared with the behavior detection by adopting the three-dimensional convolutional neural network or the two-stream convolutional network, the pedestrian behavior detection adopting the two-dimensional convolutional neural network in the present disclosure has a small calculation amount, a high running speed and a less resource consumption, and can meet real-time expectations in actual deployment; compared with a mode in which a single video image frame is directly used or features of a plurality of video image frames are stacked, and then behavior detection is performed, the two-dimensional convolutional neural network in the present disclosure learns features of the time sequence of the pedestrian behavior, so that false detection and missing detection can be effectively avoided, and the precision of the detection is improved. In addition, in the present disclosure, the type of the pedestrian behavior can be directly identified, or the type of the pedestrian behavior is identified first and then the spatial position of the pedestrian behavior is determined, so that a limitation of the application scenario caused by coarsely positioning a region of a pedestrian behavior and then determining a type of the pedestrian behavior can be avoided, and adaptability of the behavior detection to scenarios is greatly improved.

A structure of the two-dimensional convolutional neural network is not particularly limited in the present disclosure. In some implementations, the two-dimensional convolutional neural network includes at least one convolutional layer and at least one fully-connected layer. In some implementations, the data of the plurality of video image frames are input into the two-dimensional convolutional neural network in a batch processing manner, the convolutional layer in the two-dimensional convolutional neural network can perform feature extraction on the input data, and the fully-connected layer can determine the pedestrian behavior in the video stream corresponding to the current pedestrian behavior detection, according to feature data obtained through the convolutional layer.

Accordingly, in some implementations, the two-dimensional convolutional neural network includes at least one convolutional layer and at least one fully-connected layer; referring to Fig. 2, the operation S300 includes operations S310 and S320.

At operation S310, performing feature extraction on the data of the plurality of video image frames through the at least one convolutional layer to obtain feature data fusing time sequence information of the data of the plurality of video image frames, with the time sequence information representing the association relationship between time sequences of the data of the plurality of video image frames.

At operation S320, identifying the pedestrian behavior in the video stream according to the feature data through the at least one fully-connected layer.

It should be noted that, in some implementations, the feature data fusing time sequence information of the data of the plurality of video image frames refers to that the feature data can represent features of data of each video image frame and can also represent the association relationship between the time sequences of the data of the plurality of video image frames.

In some implementations, the two-dimensional convolutional neural network further includes a pooling layer.

In some implementations, a plurality of convolutional layers are serially connected in the two-dimensional convolutional neural network, and each convolutional layer performs feature extraction on input data to obtain a feature map corresponding to the input data. In response to that the data of the plurality of video image frames is input into the two-dimensional convolutional neural network in the batch processing manner, each convolutional layer can perform feature extraction on the input data to obtain a plurality of feature maps. In the present disclosure, the data of the plurality of video image frames input into the two-dimensional convolutional neural network in the batch processing manner is arranged in time sequence, and the plurality of feature maps obtained by each convolutional layer are also arranged in time sequence. In some implementations, after each convolutional layer, different time sequence information is fused and interacted by exchanging a part of feature channels of the plurality of feature maps, and finally, the time sequence information of the data of the plurality of video image frames is fused in the feature data.

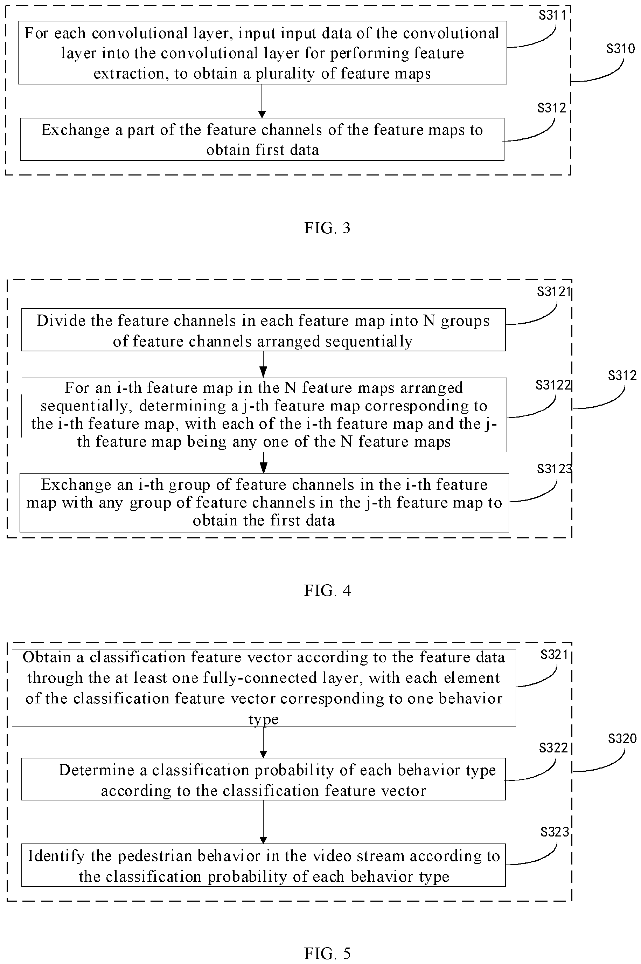

Accordingly, in some implementations, the two-dimensional convolutional neural network includes a plurality of serially connected convolutional layers; referring to Fig. 3, the operation S310 includes operations S311 and S312.

At operation S311, for each convolutional layer, inputting input data of the convolutional layer into the convolutional layer for performing feature extraction to obtain a plurality of feature maps corresponding to the data of the plurality of video image frames one by one, with each feature map including a plurality of feature channels.

At operation S312, exchanging a part of the feature channels of the feature maps to obtain first data.

In some implementations, in a case where the convolutional layer is the first convolutional layer, the input data of the convolutional layer is the data of the plurality of video image frames.

In some implementations, in a case where the convolutional layer is not the last convolutional layer or the first convolutional layer, taking the first data as input data of a next convolutional layer.

In some implementations, in a case where the convolutional layer is the last convolutional layer, taking the first data as the feature data.

It should be noted that, in some implementations, the exchanging a part of the feature channels of the feature maps only performs data movement without an addition operation and/or a multiplication operation, so that an amount of calculation is not increased during performing interaction of the time sequence information, and a rate of the data movement is relatively fast, an operation efficiency of the behavior detection is not affected.

Accordingly, in some implementations, the data of the plurality of video image frames includes data of N video image frames arranged sequentially; the feature maps include N feature maps arranged sequentially; referring to Fig. 4, the operation S312 includes operations S3121 to S3123.

At operation S3121, dividing the feature channels in each feature map into N groups of feature channels arranged sequentially.

At operation S3122, for an i-th feature map in the N feature maps arranged sequentially, determining a j-th feature map corresponding to the i-th feature map, with the i-th feature map being any one of the N feature maps arranged sequentially, the j-th feature map being any one of the N feature maps arranged sequentially.

At operation S3123, exchanging an i-th group of feature channels in the i-th feature map with any group of feature channels in the j-th feature map to obtain the first data, with N, i and j being positive integers.

How to execute the determining a j-th feature map corresponding to the i-th feature map of the operation S3122 is not particularly limited in the present disclosure. In some implementations, the j-th feature map corresponding to the i-th feature map is determined according to an algebraic relationship between i and j; in some implementations, the j-th feature map corresponding to the i-th feature map is determined according to an adjacent relationship between i and j; and in some implementations, one of the N feature maps arranged sequentially is randomly assigned as the j-th feature map corresponding to the i-th feature map.

In some implementations, a classification feature vector is obtained through the fully-connected layer of the two-dimensional convolutional neural network, and each element in the classification feature vector represents a classification probability of one behavior type. According to the classification probability of each behavior type, the pedestrian behavior in the video stream corresponding to the current pedestrian behavior detection is determined. Determining the pedestrian behavior in the video stream corresponding to the current pedestrian behavior detection includes, but is not limited to, determining whether a target behavior to be detected exists in the video stream corresponding to the current pedestrian behavior detection and determining a type of the existing target behavior.

Accordingly, in some implementations, referring to Fig. 5, the operation S320 incudes operations S321 to S323.

At operation S321, obtaining a classification feature vector according to the feature data through the at least one fully-connected layer, with each element of the classification feature vector corresponding to one behavior type.

At operation S322, determining a classification probability of each behavior type according to the classification feature vector.

At operation S323, identifying the pedestrian behavior in the video stream according to the classification probability of the each behavior type.

In some implementations, in operation S322, the classification feature vector obtained through the operation S321 is input into a classifier to obtain classification probabilities of various behavior types.

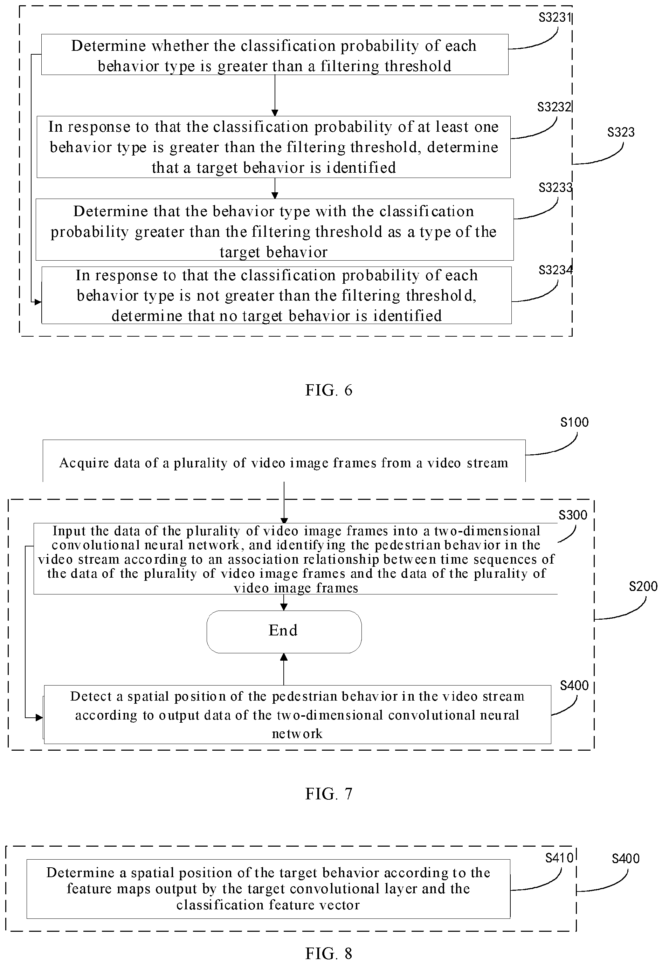

Accordingly, in some implementations, referring to Fig. 6, the operation S322 incudes operations S3231 to S3234.

At operation S3231, determining whether the classification probability of the each behavior type is greater than a filtering threshold.

At operation S3232, in response to that the classification probability of at least one behavior type is greater than the filtering threshold, determining that a target behavior is identified.

At operation S3233, determining the behavior type with the classification probability greater than the filtering threshold as the type of the target behavior.

At operation S3234, in response to that the classification probability of each behavior type is not greater than the filtering threshold, determining that no target behavior is identified.

The convolution layer of the two-dimensional convolution neural network has space invariance, i.e., a spatial correspondence relationship exists between the feature map obtained through the convolutional layer and an original image; the convolutional layer of the two-dimensional convolutional neural network subjected to training can make a region feature value, related to classification, in the feature map become greater, make a region feature value, unrelated to the classification, become smaller. In some implementations, in response to that the target behavior is identified, by performing contour analysis on the feature map output by the convolution layer of the two-dimensional convolutional neural network, an edge contour of a region related to the target behavior is determined, and a spatial position of the identified target behavior is accordingly determined. In some implementations, one convolutional layer is designated as a target convolutional layer in the at least one convolutional layer of the two-dimensional convolutional neural network, and the contour analysis is performed according to a feature map output by the target convolutional layer and a classification feature vector obtained by the fully-connected layer of the two-dimensional convolutional neural network.

In some implementations, referring to Fig. 7, after the operation S300, the operation S200 further includes an operation S400.

At operation S400, detecting a spatial position of the pedestrian behavior in the video stream according to output data of the two-dimensional convolutional neural network.

In some implementations, the operation S400 may be performed in response to that the pedestrian behavior is identified through the operation S300. In some implementations, the operation S400 is performed after each execution of the operation S300, i.e., the operation S400 is performed no matter whether the pedestrian behavior is identified. In some implementations, for different application scenarios, the operation S400 may be selected to be performed or skipped over.

Accordingly, in some implementations, the two-dimensional convolutional neural network includes at least one convolutional layer and at least one fully-connected layer; the output data of the two-dimensional convolutional neural network includes the classification feature vector obtained through the at least one fully-connected layer and a plurality of feature maps output by a target convolutional layer; the target convolutional layer is one of the at least one convolutional layer, and each element of the classification feature vector corresponds to one behavior type; referring to Fig. 8, the operation S400 includes an operation S410.

At operation S410, determining a spatial position of the target behavior according to the feature maps output by the target convolutional layer and the classification feature vector.

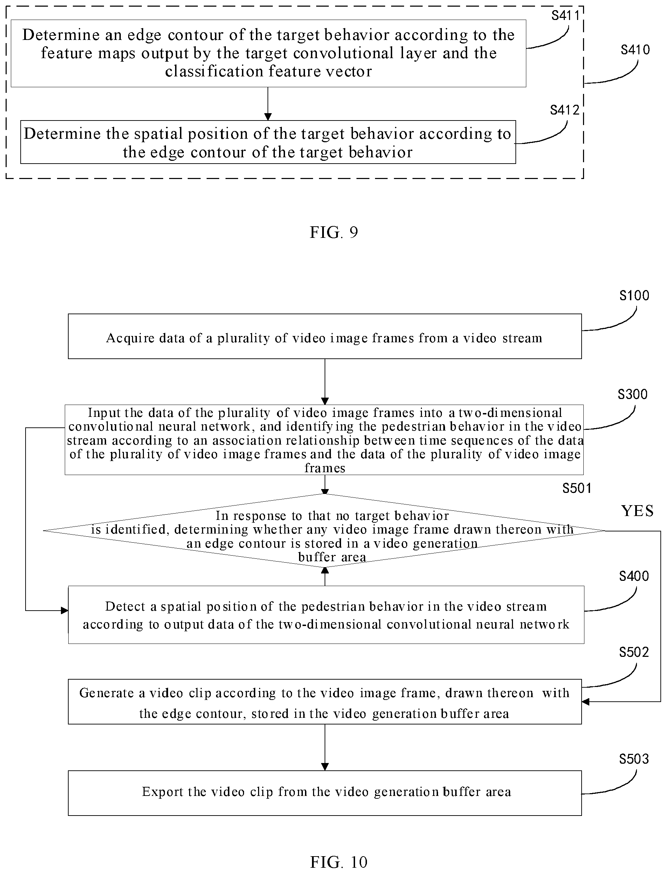

Accordingly, in some implementations, referring to Fig. 9, the operation S410 incudes operations S411 to S412.

At operation S411, determining an edge contour of the target behavior according to the feature maps output by the target convolutional layer and the classification feature vector.

At operation S412, determining the spatial position of the target behavior according to the edge contour of the target behavior.

Accordingly, in some implementations, the operation S412 may include: calculating a derivative of the classification feature vector with respect to the feature maps output by the target convolutional layer to obtain a weight map; multiplying the weight map by the feature maps output by the target convolutional layer to obtain a first space prediction map corresponding to a plurality of behavior types; extracting the first space prediction map corresponding to the behavior type with the highest classification confidence coefficient according to the first space prediction map to serve as a second space prediction map; generating a third space prediction map according to the second space prediction map, with a size of the third space prediction map being the same as a size of the video image frame; and performing edge extraction on the third space prediction map to determine the edge contour of the target behavior.

Accordingly, in some implementations, the data of the plurality of video image frames are collected from a plurality of video image frames in a preset duration; the operation S412 may include: calculating a derivative of the classification feature vector with respect to the feature maps output by the target convolutional layer, and setting a value of the derivative less than zero as zero to obtain a weight map; multiplying the weight map by the feature maps output by the target convolutional layer to obtain a product, and setting the product less than zero as zero to obtain a first space prediction map corresponding to a plurality of behavior types; extracting the first space prediction map corresponding to the behavior type with the highest classification confidence coefficient according to the first space prediction map to serve as a second space prediction map; performing normalization processing on the second space prediction map; scaling a size of the second space prediction map subjected to the normalization processing into a size of the video image frame, and performing binary processing to obtain a third space prediction map; and performing edge extraction on the third space prediction map to determine the edge contour of the target behavior.

In some implementations, the operation S412 includes: drawing the edge contour of the target behavior on the plurality of video image frames.

In some implementations, after the target behavior is identified and the spatial position of the target behavior is determined, the plurality of video image frames drawn thereon with the edge contour of the target behavior are written into a video generation buffer area, and then a video file is generated and stored in a file system.

Accordingly, in some implementations, the operation S412 further includes: after drawing the edge contour of the target behavior on the plurality of video image frames, storing the plurality of video image frames drawn thereon with the edge contour of the target behavior into the video generation buffer area.

In some implementations, each pedestrian behavior detection corresponds to the video stream of the certain duration, the data of the plurality of video image frames is acquired from the video stream of the certain duration through the operation S100. The certain duration is not particularly limited in the present disclosure. In some implementations, the certain duration is determined according to a general duration of occurrence of the pedestrian behavior to be detected. For example, the duration of fighting (i.e., an example of the pedestrian behavior) is set to two seconds, and the duration of falling (i.e., another example of the pedestrian behavior) is set to one second, and so on.

In some implementations, the pedestrian behavior may last for a duration greater than the certain duration described above. In some implementations, in each detection, if the target behavior is identified, the video image frames drawn thereon with the edge contour of the target behavior are written into the video generation buffer area, until no target behavior is identified in the detection, which indicates that the target behavior is ended, in such case, the video image frames stored in the video generation buffer area are converted into a video clip, so that the video clip recording a complete process of the target behavior from beginning to end is obtained, and a start time, an end time, a duration and other information of the target behavior can be determined according to the video clip. Accordingly, referring to Fig. 10, in some implementations, a result of inputting the data of the plurality of video image frames into the two-dimensional convolutional neural network, and identifying the pedestrian behavior in the video stream according to the association relationship between time sequences of the data of the plurality of video image frames and the data of the plurality of video image frames includes that the target behavior is identified or no target behavior is identified; in response to that no target behavior is identified, the behavior detection method further includes operations S501 to S502.

At operation S501, determining whether any video image frame drawn thereon with an edge contour is stored in the video generation buffer area.

At operation S502, in response to that the video image frame drawn thereon with the edge contour is stored in the video generation buffer area, generating a video clip according to the video image frame, drawn thereon with the edge contour, stored in the video generation buffer area.

At operation S503, exporting the video clip from the video generation buffer area.

In some implementations, the exporting the video clip from the video generation buffer area includes: storing the video clip in the video generation buffer area into a file system; and emptying the video generation buffer area.

In some implementations, the operation S100 includes: acquiring the video stream; decoding the video stream to obtain a plurality of continuous video image frames; sampling the plurality of continuous video image frames to obtain a plurality of video image frames to be detected; and preprocessing the plurality of video image frames to be detected to obtain the data of the plurality of video image frames.

It should be noted that, how to decode the video stream is not particularly limited in the present disclosure. In some implementations, a Graphics Processing Unit (GPU) is used to decode the video stream.

It should be noted that, how to sample the plurality of continuous video image frames is not particular limited in the present disclosure. In some implementations, the video image frames are randomly sampled. In some implementations, the video image frames are sampled at preset intervals. In some implementations, the video image frames are continuously sampled.

It should be noted that, compared with that the video image frames are continuously sampled, the video image frames being sampled at preset intervals can acquire more time sequence information, so as to improve the accuracy of the detection.

How to preprocess the plurality of video image frames to be detected is not particularly limited in the present disclosure. In some implementations, the preprocessing the plurality of video image frames to be detected includes: adjusting a size of each video image frame to be detected to a preset size; and performing color space conversion processing, pixel value normalization processing and standard deviation standardization processing on the video image frame, to be detected, adjusted to the preset size to obtain the data of the plurality of video image frames.

In some implementations, each pedestrian behavior detection corresponds to the video stream of a certain duration, data of a preset number of video image frames are is obtained from the video image frames of the certain duration in a uniform sampling manner.

Accordingly, in some implementations, the operation S 100 includes: determining an area of a foreground image region in a current video image frame in the video stream; in response to that the area of the foreground image region is greater than an area threshold, determining motion momentum of two adjacent video image frames; in response to that the motion momentum of two adjacent video image frames is greater than a momentum threshold, determining the current video image frame as a starting point of sampling; and sampling uniformly a preset number of video image frames from a plurality of continuous video image frames in the preset duration and preprocessing the preset number of video image frames to acquire the data of the plurality of video image frames.

How to determine the area of the foreground image region in the current video image frame is not practically limited in the present disclosure. In some implementations, the frame difference method may be adopted to extract a foreground image of the current video image frame.

How to determine the motion momentum of two adjacent video image frames is not practically limited in the present disclosure. In some implementations, the motion momentum of two adjacent video image frames is calculated by sparse optical flow.

In some implementations, before performing behavior detection through the operations S100 to S200, the behavior detection method further includes following operations of training the two-dimensional convolution neural network: acquiring the video stream; decoding the video stream to generate video image frames; performing data cleaning to obtain a sample video clip; marking a type of a pedestrian behavior in the sample video clip, and marking the sample video clip without the pedestrian behavior to be detected as backgrounds; training the two-dimensional convolution neural network by the marked sample video clip; and performing quantization operation on the trained two-dimensional convolution neural network, and converting a format of the trained two-dimensional convolution neural network.

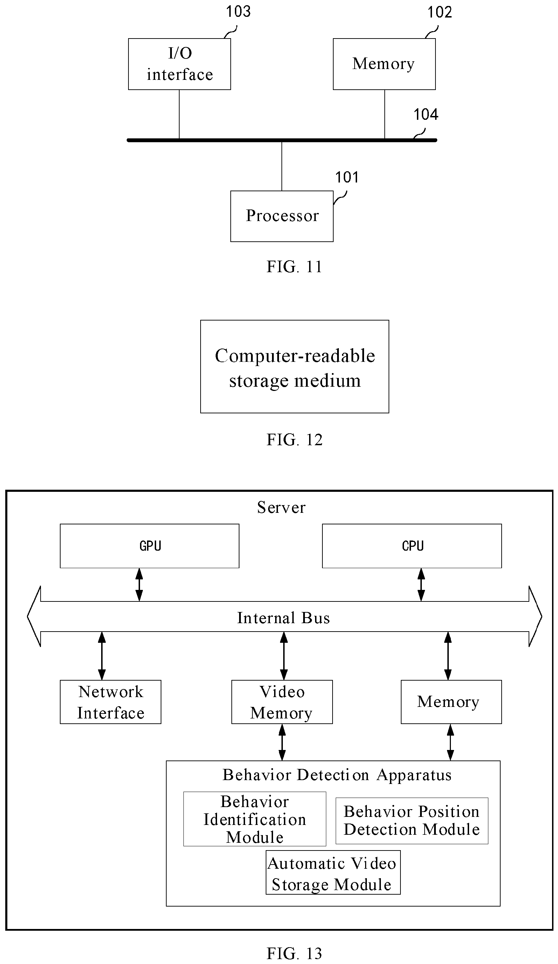

In a second aspect, referring to Fig. 11, the present disclosure provides an electronic device, including: at least one processor 101; and a memory 102 having at least one computer program stored thereon, the at least one computer program, executed by the at least one processor 101, causes the at least one processor 101 to implement the behavior detection method provided in the first aspect of the present disclosure; and at least one I/O interface 103 connected between the processor 101 and the memory 102, and configured to implement information interaction between the processor 101 and the memory 102.

The processor 101 is a device having a capability of processing data, includes, but is not limited to, a Central Processing Unit (CPU), and the like; the memory 102 is a device having a capability of storing data, includes, but is not limited to, a random access memory (RAM, in particular, SDRAM, DDR, and the like), a read only memory (ROM), an electrically erasable programmable read only memory (EEPROM), and a FLASH; and the I/O interface 103 connected between the processor 101 and the memory 102 can implement information interaction between the processor 101 and the memory 102, includes, but is not limited to, a bus and the like.

In some implementations, the processor 101, and the memory 102 are connected together through a bus 104, and are further connected to other components of a computing device.

In a third aspect, referring to Fig. 12, the present disclosure provides a computer-readable storage medium having a computer program stored thereon, the computer program, executed by a processor, causes the processor to implement the behavior detection method provided in the first aspect of the present disclosure.

In order to make those skilled in the art more clearly understand the technical solutions provided in the present disclosure, the technical solutions provided in the present disclosure are described in detail below by specific examples.

### Example 1

Fig. 13 is a schematic block diagram of a behavior detection apparatus and system architecture in an example according to the present disclosure.

As shown in Fig. 13, the behavior detection apparatus includes a behavior identification module, a behavior position detection module, and an automatic video storage module. In the example, the behavior detection apparatus is deployed on a server, and the server further includes a GPU, a CPU, a network interface, a video memory, and a memory, which are connected to each other through an internal bus.

### Example 2

A flow of performing behavior detection in the example is as follows:
loading a two-dimensional convolutional neural network into the video memory or the memory, initializing the two-dimensional convolutional neural network, and configuring parameters such as a limitation of a size of an input image, a size of batch processing, a filtering threshold, an area threshold, a general duration of occurrence of a behavior, a frame rate and the like;
acquiring a video stream from a camera, and sending the acquired video stream into the GPU of a system server for hard decoding, so as to generate a plurality of video image frames;
extracting a set of video image frames corresponding to the general duration of occurrence of the behavior from the plurality of video image frames, and uniformly sampling N frames from the set, with N being determined during training the two-dimensional convolutional neural network;
preprocessing the N video image frames obtained by uniformly sampling, fixing a long edge of the N video image frames as a specified size of the two-dimensional convolutional neural network to perform scaling in equal proportion, filling pixel values of short edges with 0, then converting the pixel values into an RGB color space, finally normalizing the pixel values to be between 0 and 1, and subtracting a mean value and dividing by a standard deviation (i.e., performing standard deviation standardization processing) to obtain data of N preprocessed video image frames;
sending the N preprocessed video image frames, as a two-dimensional data set with a size N of batch processing, into the two-dimensional convolutional neural network, so that each convolutional layer of the two-dimensional convolutional neural network can obtain features with a size of NCHW, representing N frames of feature maps with a size of CHW, with C representing the number of feature channels, and H and W respectively representing a width and a height of the feature maps;
dividing the feature channels of the N frames of feature maps output by each convolutional layer into N groups, and for an i-th frame of feature map, randomly selecting one feature map from other feature maps except the i-th frame of feature map to mark as a j-th frame, randomly selecting a group of feature channels from the N groups of feature channels of the j-th frame of feature map, and exchanging the selected group of feature channels with the i-th group of feature channels of the i-th frame of feature map, thereby performing information interaction of time sequence without additionally increasing a calculation amount;
sending the feature map subjected to the exchanging of feature channels into a next convolutional layer for calculation, obtaining feature data after the last convolutional layer, and generating a classification feature vector through a full-connected layer;
sending the classification feature vector into a behavior classifier to obtain classification probabilities of various behavior types;
in response to that the classification probability of at least one behavior type is greater than the filtering threshold, determining that a target behavior is identified;
determining the behavior type with the classification probability greater than the filtering threshold as a type of the target behavior; and in response to that the classification probability of each behavior type is not greater than the filtering threshold, determining that no target behavior is identified.

In a case where the target behavior is identified, the determining the spatial position of the target behavior includes: extracting a feature map of a target convolutional layer in the two-dimensional convolutional neural network and a classification feature vector output by a full-connected layer, calculating a derivative of the classification feature vector with respect to the feature map of the target convolutional layer, and setting the derivative with a value less than zero as zero to obtain a weight map with a space size consistent with that of the feature map of the target convolutional layer; multiplying the weight map by the feature map of the target convolutional layer to obtain a product, and setting the product with a value less than zero as zero to obtain a first space prediction map; converting the first space prediction map into a storage form of N*Class*H*W, with the Class representing the number of behavior types, performing softmax operation on the first space prediction map in a dimension of types, extracting a dimension corresponding to the type with the highest confidence coefficient from a result of classification to obtain a space prediction map of N*H*W, and calculating a maximum value of all elements in the feature map in the dimension of the number/size N of batch processing to obtain a second space prediction map of H*W; subtracting a minimum value of all elements from each element in the second space prediction map, and then dividing by the maximum value of all elements, thereby normalizing the second space prediction map to be between 0 and 1; scaling the normalized second space prediction map into a size of the video image frame to perform binary processing (if a value of the element is greater than 0.5, the value of the element is set to 1, if the value of the element is not greater than 0.5, the value of the element is set to 0) to obtain a third space prediction map; performing edge contour extraction on the third space prediction map, to obtain an edge contour as a spatial position of the target behavior; and drawing the edge contour, serving as a result of detection, on the video image frame, storing the video image frame into a video generation buffer area, and then starting a next detection.

The storing the video image frame includes: in response to that no target behavior is identified, determining whether any video image frame exists in the video generation buffer area (i.e., determining whether the target behavior is identified in a last detection); in response to that any video image frame exists in the video generation buffer area (i.e., the target behavior is identified in the last detection), generating a video clip according to the video image frame in the video generation buffer area; storing the video clip; emptying the video generation buffer area and starting the next detection; and in response to that no video image frame exists in the video generation buffer area (i.e. no target behavior is identified in the last detection), starting the next detection.

It should be understood by those of ordinary skill in the art that all or some of the operations in the method, the functional modules/components in the apparatus disclosed above may be implemented as software, firmware, hardware, or suitable combinations thereof. In a hardware implementation, the division between the functional modules/components stated above does not correspond to the division of physical components; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, the computer-readable medium may include computer storage medium (or non-transitory medium) and communication medium (or transitory medium). The computer storage medium includes volatile/nonvolatile or removable/non-removable medium used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read-Only Memory (CD-ROM), a Digital Video Disk (DVD) or other optical discs, magnetic cassettes, magnetic tapes, magnetic disks or other magnetic storage devices, or any other medium which can be used to store the desired information and can be accessed by a computer. The communication medium generally includes computer-readable instructions, data structures, program modules or other data in a modulated data signal, in a form of a carrier wave or other transmission mechanism or the like, and may include any information delivery medium.

The present disclosure discloses the exemplary embodiments, and although specific terms are employed, they are used and should only be interpreted in a generic and descriptive meaning but not for purposes of a limitation. It is apparent to those skilled in the art that features, characteristics and/or elements described in connection with specific embodiments may be used alone or in combination with features, characteristics and/or elements described in connection with other embodiments, unless explicitly stated otherwise. Therefore, it should be understood by those skilled in the art that various changes in form and details may be made without departing from the scope of the present disclosure as set forth in the appended claims.

## Claims

1. A behavior detection method, comprising:
acquiring data of a plurality of video image frames from a video stream; and
detecting a pedestrian behavior in the video stream according to the data of the plurality of video image frames,
wherein the detecting a pedestrian behavior in the video stream according to the data of the plurality of video image frames comprises at least:
inputting the data of the plurality of video image frames into a two-dimensional convolutional neural network, and identifying the pedestrian behavior in the video stream according to an association relationship between time sequences of the data of the plurality of video image frames and the data of the plurality of video image frames.

2. The method according to claim 1, wherein the two-dimensional convolutional neural network comprises at least one convolutional layer and at least one fully-connected layer; the inputting the data of the plurality of video image frames into a two-dimensional convolutional neural network, and identifying the pedestrian behavior in the video stream according to an association relationship between time sequences of the data of the plurality of video image frames and the data of the plurality of video image frames comprises:
performing feature extraction on the data of the plurality of video image frames through the at least one convolutional layer to obtain feature data fusing time sequence information of the data of the plurality of video image frames, with the time sequence information representing the association relationship between time sequences of the data of the plurality of video image frames; and
identifying the pedestrian behavior in the video stream according to the feature data through the at least one fully-connected layer.

3. The method according to claim 2, wherein the two-dimensional convolutional neural network comprises a plurality of serially connected convolutional layers; the performing feature extraction on the data of the plurality of video image frames through the at least one convolutional layer to obtain feature data comprises:
for each convolutional layer, inputting input data of the convolutional layer into the convolutional layer for performing feature extraction, to obtain a plurality of feature maps corresponding to the data of the plurality of video image frames one by one, with each feature map comprising a plurality of feature channels; and
exchanging a part of the feature channels of the feature maps to obtain first data,
wherein in response to that the convolutional layer is a first convolutional layer, the input data of the convolutional layer is the data of the plurality of video image frames;
in response to that the convolutional layer is not a last convolutional layer or the first convolutional layer, taking the first data as input data of a next convolutional layer; and
in response to that the convolutional layer is the last convolutional layer, taking the first data as the feature data.

4. The method according to claim 3, wherein the data of the plurality of video image frames comprises data of N video image frames arranged sequentially; the feature maps comprise N feature maps arranged sequentially; the exchanging a part of the feature channels of the feature maps to obtain first data comprises:
dividing the feature channels in each feature map into N groups of feature channels arranged sequentially;
for an i-th feature map in the N feature maps arranged sequentially, determining a j-th feature map corresponding to the i-th feature map, with the i-th feature map being any one of the N feature maps arranged sequentially, the j-th feature map being any one of the N feature maps arranged sequentially; and
exchanging an i-th group of feature channels in the i-th feature map with any group of feature channels in the j-th feature map to obtain the first data,
wherein N, i and j are positive integers.

5. The method according to claim 2, wherein the identifying the pedestrian behavior in the video stream according to the feature data through the at least one fully-connected layer comprises:
obtaining a classification feature vector according to the feature data through the at least one fully-connected layer, with each element of the classification feature vector corresponding to one behavior type;
determining a classification probability of each behavior type according to the classification feature vector; and
identifying the pedestrian behavior in the video stream according to the classification probability of each behavior type.

6. The method according to claim 5, wherein the identifying the pedestrian behavior in the video stream according to the classification probability of each behavior type comprises:
determining whether the classification probability of each behavior type is greater than a filtering threshold;
in response to that the classification probability of at least one behavior type is greater than the filtering threshold, determining that a target behavior is identified;
determining that the behavior type with the classification probability greater than the filtering threshold as a type of the target behavior; and
in response to that the classification probability of each behavior type is not greater than the filtering threshold, determining that no target behavior is identified.

7. The method according to any one of claims 1 to 6, wherein the detecting a pedestrian behavior in the video stream according to the data of the plurality of video image frames further comprises:
after inputting the data of the plurality of video image frames into the two-dimensional convolutional neural network, and identifying the pedestrian behavior in the video stream according to the association relationship between time sequences of the data of the plurality of video image frames and the data of the plurality of video image frames, detecting a spatial position of the pedestrian behavior in the video stream according to output data of the two-dimensional convolutional neural network.

8. The method according to claim 7, wherein the two-dimensional convolutional neural network comprises at least one convolutional layer and at least one fully-connected layer; the output data of the two-dimensional convolutional neural network comprises the classification feature vector obtained through the at least one fully-connected layer and a plurality of feature maps output by a target convolutional layer; the target convolutional layer is one of the at least one convolutional layer, and each element of the classification feature vector corresponds to one behavior type; the detecting a spatial position of the pedestrian behavior in the video stream according to output data of the two-dimensional convolutional neural network comprises:
determining a spatial position of the target behavior according to the feature maps output by the target convolutional layer and the classification feature vector.

9. The method according to claim 8, wherein the determining a spatial position of the target behavior according to the feature maps output by the target convolutional layer and the classification feature vector comprises:
determining an edge contour of the target behavior according to the feature maps output by the target convolutional layer and the classification feature vector; and
determining the spatial position of the target behavior according to the edge contour of the target behavior.

10. The method according to claim 9, wherein the data of the plurality of video image frames are collected from a plurality of video image frames in a preset duration; the determining an edge contour of the target behavior according to the feature maps output by the target convolutional layer and the classification feature vector comprises:
calculating a derivative of the classification feature vector with respect to the feature maps output by the target convolutional layer to obtain a weight map;
multiplying the weight map by the feature maps output by the target convolutional layer to obtain a first space prediction map corresponding to a plurality of behavior types;
extracting the first space prediction map corresponding to the behavior type with a highest classification confidence coefficient according to the first space prediction map to serve as a second space prediction map;
generating a third space prediction map according to the second space prediction map, with a size of the third space prediction map being the same as a size of the video image frame; and
performing edge extraction on the third space prediction map to determine the edge contour of the target behavior.

11. The method according to claim 10, wherein the determining the spatial position of the target behavior according to the edge contour of the target behavior comprises:
drawing the edge contour of the target behavior on the plurality of video image frames.

12. The method according to claim 11, wherein the determining the spatial position of the target behavior according to the edge contour of the target behavior further comprises:
after drawing the edge contour of the target behavior on the plurality of video image frames, storing the plurality of video image frames drawn thereon with the edge contour of the target behavior into a video generation buffer area.

13. The method according to any one of claims 1 to 6, wherein a result of inputting the data of the plurality of video image frames into the two-dimensional convolutional neural network, and identifying the pedestrian behavior in the video stream according to the association relationship between time sequences of the data of the plurality of video image frames and the data of the plurality of video image frames comprises that the target behavior is identified or no target behavior is identified;
in response to that no target behavior is identified, the behavior detection method further comprises:
determining whether any video image frame drawn thereon with an edge contour is stored in a video generation buffer area;
in response to that any video image frame drawn thereon with the edge contour is stored in the video generation buffer area, generating a video clip according to the video image frame, drawn thereon with the edge contour, stored in the video generation buffer area; and
exporting the video clip from the video generation buffer area.

14. The method according to any one of claims 1 to 6, wherein the acquiring data of a plurality of video image frames from a video stream comprises:
determining an area of a foreground image region in a current video image frame in the video stream;
in response to that the area of the foreground image region is greater than an area threshold, determining motion momentum of two adjacent video image frames;
in response to that the motion momentum of two adjacent video image frames is greater than a momentum threshold, determining the current video image frame as a starting point of sampling; and
sampling uniformly a preset number of video image frames from a plurality of continuous video image frames in a preset duration and preprocessing the preset number of video image frames to acquire the data of the plurality of video image frames.

15. An electronic device, comprising:
at least one processor;
a memory having at least one computer program stored thereon, the at least one computer program, executed by the at least one processor, causing the at least one processor to implement the behavior detection method according to any one of claims 1 to 14; and
at least one I/O interface connected between the processor and the memory and configured to implement information interaction between the processor and the memory.

16. A computer-readable storage medium having a computer program stored thereon, wherein the computer program, executed by a processor, causes the processor to implement the behavior detection method according to any one of claims 1 to 14.
